# EUROPEAN PATENT APPLICATION

(11) **EP 2 608 354 A1**
(43) Date of publication of application: **26.06.2013**
(21) Application number: 12157153.3
(22) Date of filing: 27.02.2012
(51) Int. Cl.: H02J 7/02, H02J 5/00, G06F 3/044

(54) **Wireless charger**

(30) Priority: 22.12.2011 TW 100148077
(71) Applicant: Primax Electronics Ltd, Taipei (TW)
(72) Inventor: Wang, Jong-Ding, Taiwan, ROC Taipei (TW)
(74) Representative: Rees, Simon John Lewis

(57) **Abstract**

A wireless charger includes a charging platform and a capacitive touch device. The capacitive touch device includes a first touch-sensitive layer, a second touch-sensitive layer, and a microcontroller. The capacitive touch device is disposed over the charging platform for sensing a position of the electronic device.

## Description

### FIELD OF THE INVENTION

The present invention relates to a wireless charger, and more particularly to a wireless charger having a function of sensing a position of an object to be charged.

### BACKGROUND OF THE INVENTION

With increasing development of science and technology, electronic devices have experienced great growth and are now rapidly gaining in popularity. These electronic devices may provide convenience to the user's life. However, since the electronic devices have respective charging connectors, some drawbacks may occur. For example, if the user wants to charge a specified electronic device, an exclusive charger is required to charge this electronic device. Alternatively, the user may purchase an expensive universal charger complying with many kinds of charging connectors. In other words, the user may usually and inadvertently gather many chargers. As known, too many chargers occupy a lot of space and waste resources, and are not user-friendly.

For solving the above drawbacks, a variety of wireless chargers have been disclosed. A wireless charger is a device that transfers electric energy through a magnetic field according to an electromagnetic induction principle. Consequently, the wireless charger can charge an electronic device in a wireless transmission manner. The electromagnetic induction principle will be simply described as follows. Firstly, an electric current flows through a coil of the wireless charger to result in a change of a magnetic field. Due to the change of the magnetic field, another coil of the electronic device converts the power from the magnetic field change into another electric current to charge a battery of the electronic device. In such way, the electronic device is wirelessly charged.

Conventionally, the wireless charger has a charging platform on a surface thereof. The electronic device to be charged is placed on the charging platform. However, the charging platform has no mechanism for positioning the electronic device. Generally, the distance between the coil of the electronic device and the coil of the wireless charger has a large influence on the magnetic field change. If the electronic device is not precisely placed on a proper position of the charging platform, the distance between the coil of the electronic device and the coil of the wireless charger is too far. Consequently, the magnetic field change induced by the electronic device falls behind the change of the magnetic field generated by the wireless charger. Under this circumstance, the wireless charging efficiency is largely deteriorated, and the energy is unwillingly consumed and wasted.

### SUMMARY OF THE INVENTION

The present invention provides a wireless charger with enhanced wireless charging efficiency.

In accordance with an aspect of the present invention, there is provided a wireless charger for charging an electronic device. The wireless charger includes a charging platform and a capacitive touch device. The charging platform is used for supporting the electronic device. The capacitive touch device is disposed over the charging platform for sensing a position of the electronic device. The capacitive touch device includes a first touch-sensitive layer, a second touch-sensitive layer, and a microcontroller. The first touch-sensitive layer includes plural first conductor lines, which are parallel with each other and arranged along a first direction. The second touch-sensitive layer includes plural second conductor lines, which are parallel with each other and arranged along a second direction. The microcontroller is electrically connected with the plural first conductor lines and the plural second conductor lines for detecting a change of a capacitance value of the plural first conductor lines and the plural second conductor lines, thereby acquiring a position information of the electronic device.

In an embodiment, the wireless charger further includes a coil and a driving device. The coil is used for converting an electric energy into a change of a magnetic field. The driving device is connected with the coil for moving the coil according to the position information.

In an embodiment, the capacitive touch device is attached on the charging platform.

In an embodiment, the position information is a coordinate.

In an embodiment, the capacitive touch device is a projected capacitive touchpad.

The above objects and advantages of the present invention will become more readily apparent to those ordinarily skilled in the art after reviewing the following detailed description and accompanying drawings, in which:

### BRIEF DESCRIPTION OF THE DRAWINGS

FIG. 1 is a schematic perspective view illustrating a wireless charger according to an embodiment of the present invention;

FIG. 2 is a schematic exploded view illustrating a capacitive touch device used in the wireless charger of the present invention; and

FIG. 3 schematically illustrates the relationship between the wireless charger and the electronic device according to the present invention.

### DETAILED DESCRIPTION OF THE PREFERRED EMBODIMENT

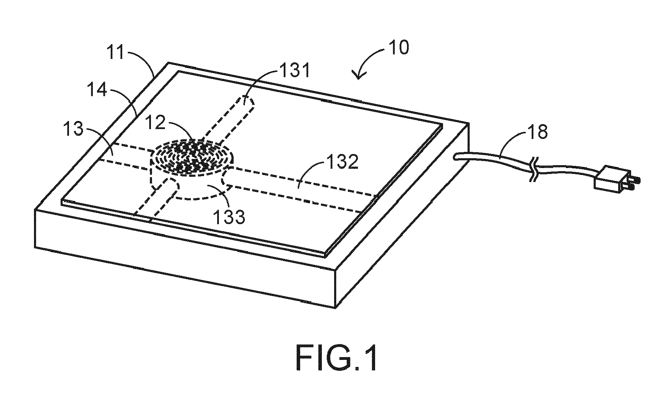

FIG. 1 is a schematic perspective view illustrating a wireless charger according to an embodiment of the present invention. As shown in FIG. 1, the wireless charger 10 comprises a charging platform 11, a coil 12, a driving device 13, and a capacitive touch device 14. The charging platform 11 has a plane for supporting the electronic device. That is, the electronic device to be charged may be placed on the plane of the charging platform 11 by the user. The coil 12 and the driving device 13 are both disposed within the charging platform 11. The driving device 13 is connected with the coil 12 for driving movement of the coil 12 to a proper position in a horizontal direction or a vertical direction. The term "proper position" will be illustrated later.

Please refer to FIG. 1 again. The driving device 13 comprises a first motor (not shown), a second motor (not shown), a first movable shaft 131, a second movable shaft 132, and a coil holder 133. The first motor is used for driving movement of the first movable shaft 131 in the horizontal direction. The second motor is used for driving movement of the second movable shaft 132 in the vertical direction. The first movable shaft 131 and the second movable shaft 132 are perpendicular to each other. In addition, the first movable shaft 131 and the second movable shaft 132 are penetrated through the coil holder 133, so that the position of the coil holder 133 is changeable by changing the relative positions of the first movable shaft 131 and the second movable shaft 132. The coil 12 is disposed on the coil holder 133. By the coil 12, the electric energy which is transmitted to the wireless charger 10 through an electric wire 18 may be converted into a change of a magnetic field.

The capacitive touch device 14 is disposed on the charging platform 11 for sensing the position of the electronic device overlying the charging platform 11. In this embodiment, the capacitive touch device 14 is attached on a top surface of the charging platform 11 through a backside adhesive. The way of attaching the capacitive touch device 14 on the top surface of the charging platform 11 is presented herein for purpose of illustration and description only.

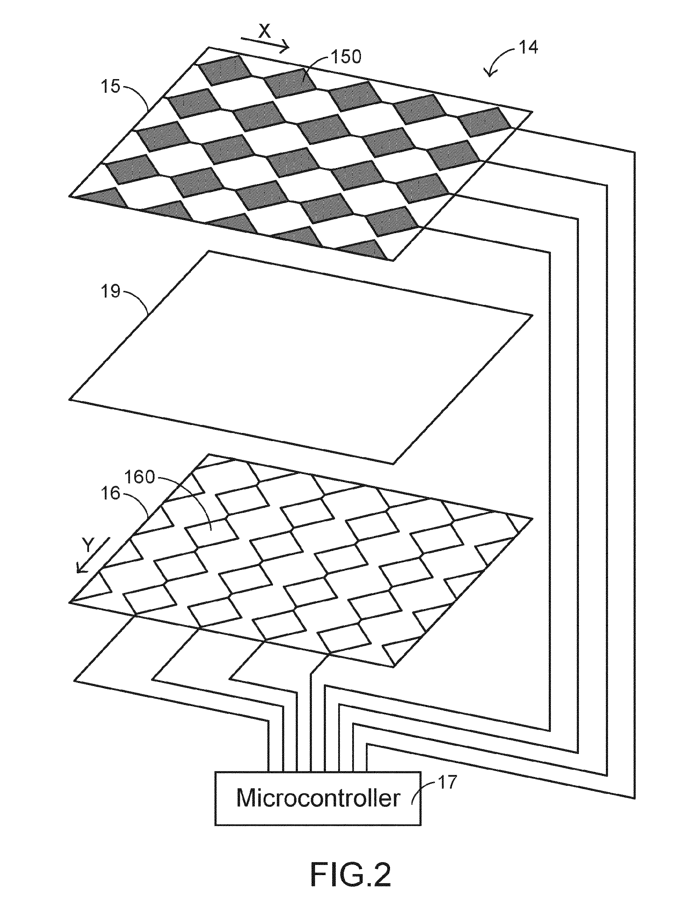

Please refer to FIG. 2. FIG. 2 is a schematic exploded view illustrating a capacitive touch device used in the wireless charger of the present invention. As shown in FIG. 2, the capacitive touch device 14 comprises a first touch-sensitive layer 15, a second touch-sensitive layer 16, and a microcontroller 17. The first touch-sensitive layer 15 is disposed over the second touch-sensitive layer 16. In this embodiment, the first touch-sensitive layer 15 and the second touch-sensitive layer 16 are transparent conductor layers, which are made of indium tin oxide for example. Alternatively, the first touch-sensitive layer 15 and the second touch-sensitive layer 16 may be made of other transparent conductive material such as indium zinc oxide.

Hereinafter, the capacitive touch device 14 will be illustrated in more details with reference to FIG. 2. As shown in FIG. 2, the first touch-sensitive layer 15 comprises plural first conductor lines 150, which are parallel with each other and arranged along a first direction X. The second touch-sensitive layer 16 comprises plural second conductor lines 160, which are parallel with each other and arranged along a second direction Y. The plural first conductor lines 150 and the plural second conductor lines 160 are electrically connected with the microcontroller 17. The microcontroller 17 is used for detecting a change of a capacitance value of the plural first conductor lines 150 and/or the plural second conductor lines 160. In this embodiment, the first direction X is the horizontal direction, and the second direction Y is the vertical direction. In addition, the first direction X and the second direction Y are perpendicular to each other.

In this embodiment, the capacitive touch device 14 is a projected capacitive touchpad. In particular, the capacitive touch device 14 is projected capacitive touchpad produced by a two-piece laminating process. As shown in FIG. 2, the plural first conductor lines 150 of the first touch-sensitive layer 15 is plated on the rear surface of a transparent substrate (e.g. a glass layer or a plastic layer), and the plural second conductor lines 160 of the second touch-sensitive layer 16 are plated on the front surface of another transparent substrate. Then, an insulating layer 19 is arranged between the first touch-sensitive layer 15 and the second touch-sensitive layer 16. After the first touch-sensitive layer 15 and the second touch-sensitive layer 16 are attached on the insulating layer 19, a sensing plane of the capacitive touch device 14 is completed. However, those skilled in the art will readily observe that numerous modifications and alterations may be made while retaining the teachings of the invention. For example, the plural first conductor lines 150 and the plural second conductor lines 160 may be respectively plated on the front surface and the rear surface of the same transparent substrate (i.e. in a single-piece and double-side manner). Alternatively, the plural first conductor lines 150 and the plural second conductor lines 160 may be plated on the same surface of the same transparent substrate (i.e. in a single-piece laminating manner).

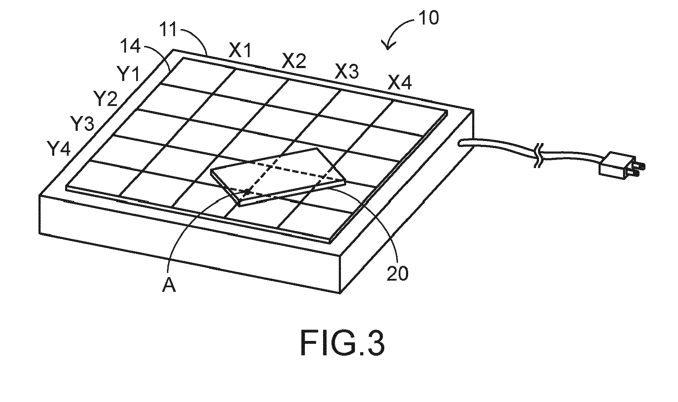

Hereinafter, the term "proper position" will be illustrated in more details. In short, the proper position is an optimal position for wirelessly charging the electronic device. That is, the proper position is the optimal position where the electronic device is placed. Please refer to FIG. 3, which schematically illustrates the relationship between the wireless charger and the electronic device according to the present invention.

As shown in FIG. 3, when the electronic device 20 is placed on the charging platform 11 of the wireless charger 10, the electronic device 20 is contacted with the capacitive touch device 14, which is disposed over the charging platform 11. Since at least one part of the electronic device 20 is made of a conductive material, the electronic device 20 may result in a change of a capacitance value of the capacitive touch device 14, thereby generating at least one touching point.

In this embodiment, an example of the capacitive touch device 14 includes but is not limited to a mutual-capacitive touch device. The plural first conductor lines 150 are X electrodes, and the plural second conductor lines 160 are Y electrodes. The intersection between each X electrode and each Y electrode is defined as an X electrode-Y electrode capacitor.

Please refer to FIG. 3 again. When the electronic device 20 is in contact with a touching point A of the capacitive touch device 14, the conductive property of the electronic device 20 allows the X3 electrode and the Y4 electrode near the touching point A to result in a capacitance value. That is, a capacitor between the electronic device 20 and the X3 electrode and another capacitor between the electrode device 20 and the Y4 electrode are generated. Under this circumstance, the capacitance value of the X3 electrode-Y4 electrode capacitor is changed. After the change of the capacitance value of the X3 electrode-Y4 electrode capacitor is detected by the microcontroller 17, the position information of the electronic device 20 is acquired by the microcontroller 17.

In this embodiment, the position information is a coordinate of the touching point A. For example, A = (X3, Y4). Then, according to the position information, the coil 12 is moved by the driving device 14. That is, the first movable shaft 131 is driven by the first motor to be moved to a position under the X3 electrode, and the second movable shaft 132 is driven by the second motor to be moved to a position under the Y4 electrode. In such way, the coil is moved to the position directly under the touching point A. Under this circumstance, since the coil 12 is moved to the optimal position for wirelessly charging the electronic device 20, the wireless charging efficiency of the capacitive touch device 14 will be enhanced.

When the coil 12 is moved to the position under the touching point A of the capacitive touch device 14, the electric current flowing through the coil 12 generates a magnetic field. When a coil (not shown) outside or inside the electronic device 20 senses the change of the magnetic field in the surroundings, the coil of the electronic device 20 generates a corresponding induction current in response to the change of the magnetic field. The induction current is used to charge the electronic device 20, especially a battery of the electronic device 20, thereby performing the charging operation.

From the above description, the wireless charger of the present invention comprises a charging platform and a capacitive touch device. The capacitive touch device comprises a first touch-sensitive layer, a second touch-sensitive layer, and a microcontroller. The charging platform is used for supporting the electronic device. The capacitive touch device is disposed over the charging platform for sensing a position of the electronic device. After the position information of the electronic device is acquired, the coil is driven by the driving device to the position under the electronic device according to the position information. Since the coil is moved to the optimal position for sensing the magnetic field, the wireless charging efficiency of the wireless charger is largely enhanced.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A wireless charger for charging an electronic device, said wireless charger comprising:
a charging platform for supporting said electronic device; and
a capacitive touch device disposed over said charging platform for sensing a position of said electronic device, wherein said capacitive touch device comprises:
a first touch-sensitive layer comprising plural first conductor lines, which are parallel with each other and arranged along a first direction;
a second touch-sensitive layer comprising plural second conductor lines, which are parallel with each other and arranged along a second direction; and
a microcontroller electrically connected with said plural first conductor lines and said plural second conductor lines for detecting a change of a capacitance value of said plural first conductor lines and said plural second conductor lines, thereby acquiring a position information of said electronic device.

2. The wireless charger according to claim 1, wherein further comprising:
a coil for converting an electric energy into a change of a magnetic field; and
a driving device connected with said coil for moving said coil according to said position information.

3. The wireless charger according to claim 1, wherein said capacitive touch device is attached on said charging platform.

4. The wireless charger according to claim 1, wherein said position information is a coordinate.

5. The wireless charger according to claim 1, wherein said capacitive touch device is a projected capacitive touchpad.
